# FASCICULE DE BREVET EUROPEEN

(11) **EP 3 942 158 B1**
(45) Date de publication et mention de la délivrance du brevet: **28.01.2026**
(21) Numéro de dépôt: 20726510.9
(22) Date de dépôt: 16.03.2020
(51) Int. Cl.: F01D 5/18

(54) **AUBE DE TURBOMACHINE ÉQUIPÉE D'UN CIRCUIT DE REFROIDISSEMENT OPTIMISÉ**
MIT OPTIMIERTEM KÜHLKREISLAUF AUSGESTATTETE TURBINENTRIEBWERKSSCHAUFEL
TURBINE ENGINE BLADE PROVIDED WITH AN OPTIMISED COOLING CIRCUIT

(30) Priorité: 22.03.2019 FR 1903017
(43) Date de publication de la demande: 26.01.2022
(73) Titulaire: SAFRAN AIRCRAFT ENGINES, 75015 Paris (FR); SAFRAN, 75015 Paris (FR)
(72) Inventeur: FANELLI, Jérémy, Jacques, Attilio, 77550 MOISSY-CRAMAYEL (FR); CARIOU, Romain, Pierre, 77550 MOISSY-CRAMAYEL (FR); SIMON, Vianney, 77550 MOISSY-CRAMAYEL (FR); TANG, Ba-Phuc, 77550 MOISSY-CRAMAYEL (FR)
(74) Mandataire: Gevers & Orès
(86) Numéro de dépôt international: PCT/FR2020/050566
(87) Numéro de publication internationale: WO 2020/193913

(56) Documents cités:
- EP-A1- 1 267 039
- EP-A1- 3 176 376
- EP-A2- 1 793 083
- WO-A1-2017/153687
- US-A1- 2013 259 645

## Description

### Domaine de l'invention

La présente invention concerne le domaine des turbomachines et en particulier une aube de turbomachine équipée d'un circuit de refroidissement destiné à la refroidir.

### Arrière-plan technique

L'art antérieur comprend les documents EP-A2-1 793 083, EP-A1-1 267 039 et US-A1-2013/259645.

Les aubes de turbomachine, notamment les aubes de turbine haute pression sont soumises à des températures très élevées qui peuvent réduire leur durée de vie et dégrader les performances de la turbomachine. En effet, les turbines de turbomachine sont agencées en aval de la chambre de combustion de la turbomachine qui éjecte un flux gazeux chaud lequel est détendu par les turbines et permet de les entraîner en rotation pour le fonctionnement de la turbomachine. La turbine haute pression qui est placée directement à la sortie de la chambre de combustion subit les températures les plus élevées.

Afin de permettre aux aubes de turbine de supporter ces contraintes thermiques sévères, il est connu de prévoir un circuit de refroidissement dans lequel circule un air relativement plus froid qui est prélevé au niveau des compresseurs, ces derniers étant situés en amont de la chambre de combustion. Plus précisément, chaque aube de turbine comprend une pale avec une surface intrados et une surface extrados qui sont reliées en amont par un bord d'attaque et en aval par un bord de fuite. Le circuit de refroidissement comprend une cavité située à l'intérieur de l'aube et débouchant dans des orifices qui sont placés au voisinage du bord de fuite. Ces orifices délivrent des jets d'air de refroidissement sur les parois de la pale.

Cependant, les orifices ne sont pas alimentés en air uniformément. Un dispositif de calibrage a été développé de manière à éviter que la majeure partie du débit d'air de refroidissement ne soit délivré que dans le premier orifice qui se trouve radialement le plus proche du pied de l'aube. Ce dispositif de calibrage comprend une cloison qui est pourvue de trous et qui est placée sur le chemin d'air de refroidissement en amont des orifices. Ces trous permettent que chaque orifice réalise un jet localisé qui va refroidir la surface intrados.

Toutefois, les trous de ce dispositif de calibrage sont extrêmement sollicités mécaniquement du fait des gradients thermiques locaux, de l'effort centrifuge lié à la rotation de l'aube qui introduit des contraintes de traction, et de la géométrie des trous qui induit un facteur de concentration de contrainte « Kt ».

### Résumé de l'invention

L'objectif de la présente invention est de réduire les contraintes mécaniques que subissent notamment les trous du dispositif de calibrage de l'air de refroidissement tout en évitant les modifications structurelles importantes du dispositif lui-même et de l'aube.

Nous parvenons à cet objectif conformément à l'invention grâce à une aube de turbomachine comprenant :
- une pale avec une paroi intrados et une paroi extrados qui sont reliées en amont par un bord d'attaque et en aval par un bord de fuite,
- un circuit de refroidissement qui comprend une cavité interne s'étendant à l'intérieur de la pale et une pluralité d'orifices de sortie orientés sensiblement chacun suivant un axe longitudinal X, chaque orifice de sortie communiquant avec la cavité interne et étant agencé au voisinage du bord de fuite, et
- un dispositif de calibrage agencé dans la cavité interne et pourvu de conduits de calibrage disposés sensiblement en regard des orifices de sortie, les conduits de calibrage comprenant chacun une section transversale, sensiblement perpendiculaire à l'axe longitudinal, de forme oblongue ou sensiblement oblongue.

Ainsi, cette solution permet d'atteindre l'objectif susmentionné. En particulier, la forme particulière des conduits de calibrage permet une forte réduction des contraintes mécaniques, et notamment des contraintes statiques et d'augmenter le rayon de la section du conduit tout en restant à iso section, donc à iso débit. La charge est répartie entre les extrémités allongées du trou ce qui augmente la surface de contact du trou et réduit d'autant plus la contrainte. Une telle forme permet également de limiter le risque de recristallisation des grains du matériau dans lequel est réalisé le dispositif de calibrage et l'aube. Enfin, cette configuration permet un gain de masse par rapport aux solutions classiques consistant à augmenter l'épaisseur (donc la masse) de la cloison du dispositif de calibrage.

L'aube comprend également l'une ou plusieurs des caractéristiques suivantes, prises seules ou en combinaison :
- le dispositif de calibrage comprend une cavité de calibrage disposée en aval des conduits de calibrage, la cavité de calibrage étant en communication fluidique avec les conduits de calibrage et les orifices de sortie.
- les conduits de calibrage sont portés par une cloison s'étendant radialement dans la pale et formant en amont la cavité interne et en aval la cavité de calibrage laquelle forme un réservoir.
- chaque conduit de calibrage comprend une première portion et une deuxième portion rectilignes qui sont opposées suivant une largeur prédéterminée passant par l'axe central de chaque conduit.
- chaque première et deuxième portions rectilignes s'étend sur une distance d de l'ordre de 0.2 mm.
- chaque conduit de calibrage s'étend sur une hauteur prédéterminée et comprend une première extrémité et une deuxième extrémité arrondies qui sont opposées suivant la hauteur prédéterminée.
- le rapport de la hauteur prédéterminée et de la largeur prédéterminée est compris entre 0.5 et 2, 5.
- chaque conduit de calibrage comprend des portions en arc de cercle ayant chacun un premier rayon R1 et qui sont symétriques par rapport à un premier plan médian passant par l'axe central et perpendiculaire à la largeur L, et qui sont symétriques par rapport à un deuxième plan médian passant par l'axe central et perpendiculaire à la hauteur prédéterminée H.
- les première et deuxième extrémités sont arrondies suivant un arc de cercle d'un deuxième rayon R2, la valeur du deuxième rayon R2 étant inférieure à celle du premier rayon R1.
- la valeur du premier rayon R1 est égale à deux fois un rayon nominal R0 d'un conduit de calibrage à section circulaire, la section circulaire ayant une surface de passage égale à celle de la section transversale du conduit de calibrage avec une section de forme oblongue.
- l'axe central est déterminé par le milieu des hauteur et largeur prédéterminées de chaque conduit de calibrage.

L'invention concerne également une turbine de turbomachine comprenant au moins une aube de turbomachine présentant les caractéristiques susmentionnées.

L'invention concerne en outre une turbomachine comprenant au moins une turbine de turbomachine telle que précitée.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
[Fig. 1] La figure 1 est une vue en coupe axiale et partielle d'un exemple de turbomachine à laquelle s'applique l'invention ;
[Fig. 2] La figure 2 est une vue schématique et en coupe axiale d'un exemple d'aube de turbomachine selon l'invention ;
[Fig. 3] La figure 3 est une vue en coupe transversale d'une aube de turbomachine refroidie équipée d'un dispositif de calibrage d'un air de refroidissement destiné à être éjecté par des orifices au niveau de son bord de fuite ;
[Fig. 4] La figure 4 est une vue schématique d'un exemple de conduit de calibrage d'un dispositif de calibrage d'une aube de turbomachine destinée à être refroidie selon l'invention ;
[Fig. 5] La figure 5 illustre une cartographie des contraintes statiques s'appliquant sur un conduit de calibrage de section circulaire d'un dispositif de calibrage de l'art antérieur ;
[Fig. 6] La figure 6 illustre une cartographie des contraintes statiques s'appliquant sur un conduit de calibrage de section oblongue d'un dispositif de calibrage selon l'invention.

### Description détaillée de l'invention

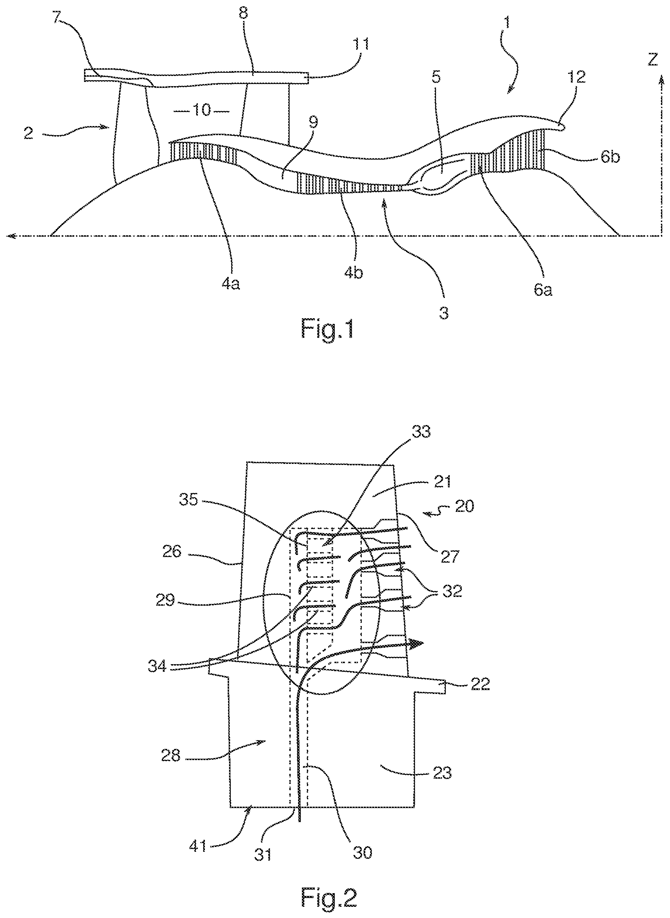

La figure 1 montre une vue en coupe axiale d'une turbomachine 1 d'axe longitudinal X à laquelle s'applique l'invention. La turbomachine représentée est une turbomachine double flux et double corps destiné à être montée sur un aéronef selon l'invention. Bien entendu, l'invention n'est pas limitée à ce type de turbomachine.

Cette turbomachine 1 à double flux comprend, de manière générale, une soufflante 2 montée en amont d'un générateur de gaz 3. Dans la présente invention, et de manière générale, les termes « amont » et « aval » sont définis par rapport à la circulation des gaz dans la turbomachine et ici suivant l'axe longitudinal X (et même de gauche à droite sur la figure 1). Les termes « axial » et « axialement » sont définis par rapport à l'axe longitudinal X. De même, les termes « radial », « interne » et « externe » sont définis par rapport à un axe radial Z perpendiculaire à l'axe longitudinal X et au regard de l'éloignement par rapport à l'axe longitudinal X.

Le générateur de gaz 3 comprend d'amont en aval, un compresseur basse pression 4a, un compresseur haute pression 4b, une chambre de combustion 5, une turbine haute pression 6a et une turbine basse pression 6b.

La soufflante 2, qui est entourée par un carter de soufflante 7 portée par une nacelle 8, divise l'air qui entre dans la turbomachine en un flux d'air primaire qui traverse le générateur de gaz 3 et en particulier dans une veine primaire 9, et en un flux d'air secondaire qui circule autour du générateur de gaz dans une veine secondaire 10.

Le flux d'air secondaire est éjecté par une tuyère secondaire 11 terminant la nacelle alors que le flux d'air primaire est éjecté à l'extérieur de la turbomachine via une tuyère d'éjection 12 située en aval du générateur de gaz 3.

La turbine haute pression 6a, comme la turbine basse pression 6b, comprend un ou plusieurs étages. Chaque étage comprend un aubage stator monté en amont d'un aubage mobile. L'aubage stator comprend une pluralité d'aubes de stator ou fixes, appelées distributeur, qui sont réparties circonférentiellement autour de l'axe longitudinal X. L'aubage mobile comprend une pluralité d'aubes mobiles qui sont réparties également circonférentiellement autour d'un disque centré sur l'axe longitudinal X. Les distributeurs dévient et accélèrent le flux aérodynamique en sortie de la chambre de combustion vers les aubes mobiles pour que celles-ci soient entrainées en rotation.

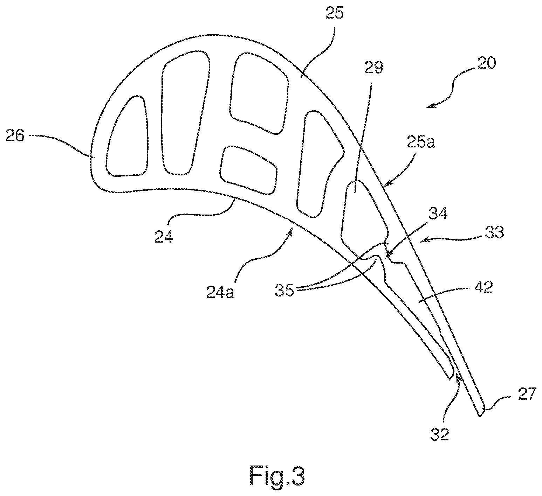

En référence aux figures 2 et 3, chaque aube de turbine (et ici une aube mobile 20 de turbine haute pression) comprend une pale 21 s'élevant radialement depuis une plateforme 22. Cette dernière est portée par un pied 23 qui est destiné à s'implanter dans une des rainures correspondantes du disque de turbine. Chaque pale 21 comprend une paroi intrados 24 et une paroi extrados 25 qui sont reliées en amont par un bord d'attaque 26 et en aval par un bord de fuite 27. Les parois intrados (avec une surface intrados 24a) et extrados (avec une surface extrados 25a) sont opposées suivant un axe transversal qui est perpendiculaire aux axes longitudinal et radial.

L'aube 20 comprend un circuit de refroidissement 28 destiné à refroidir les parois de la pale subissant les températures élevées du flux d'air primaire quittant la chambre de combustion 5 et la traversant. Le circuit de refroidissement 28 comprend une cavité interne 29 qui s'étend radialement à l'intérieur de la pale, et en particulier entre la paroi intrados 24 et la paroi extrados 25. Le pied 23 comprend un canal d'alimentation 30 qui comprend une entrée de fluide de refroidissement 31 (ici de l'air de refroidissement) prélevé en amont de la chambre de combustion tel que sur le compresseur basse pression et qui débouche dans la cavité 29. Le canal 30 débouche également sur une face radialement interne 41 du pied de l'aube. Le circuit de refroidissement comprend également des orifices de sortie 32 qui sont agencés au voisinage du bord de fuite 27 de la pale. Les orifices de sortie sont orientés suivant l'axe longitudinal X. Par ailleurs, les orifices de sortie 32 sont alignés et répartis régulièrement sensiblement suivant l'axe radial.

Sur la figure 3, les orifices de sortie 32 sont aménagés dans la paroi intrados 24 et débouche sur la surface intrados 24a. Dans cet exemple de réalisation, la cavité 29 est située également en aval de la pale, soit plus vers le bord de fuite.

Comme nous pouvons le voir également sur les figures 2 et 3, l'aube comprend un dispositif de calibrage 33 qui est agencé sur le chemin de l'air de refroidissement de manière à réguler son débit. Le dispositif de calibrage 33 comprend plusieurs conduits de calibrage 34 et est avantageusement agencé dans la cavité 29 à l'intérieur de la pale. Les conduits de calibrage 34 permettent de mieux répartir le flux d'air sur l'ensemble des orifices sans perte de débit.

Plus précisément, le dispositif de calibrage 33 comprend une cloison 35 qui s'étend suivant l'axe radial (en situation d'installation) et qui est définie dans un plan médian contenant l'axe radial. Cette cloison 35 est percée de conduits de calibrage 34 de part et d'autre suivant sensiblement un axe perpendiculaire au plan médian de la cloison. La paroi de la cloison présente une épaisseur de l'ordre de 1.5 mm. Les conduits 34 sont alignés et répartis régulièrement suivant l'axe radial le long de la cloison. De même, en situation d'installation, les conduits 34 sont sensiblement en regard des orifices de sortie 32 de la pale. En d'autres termes, l'air de refroidissement circule sensiblement axialement dans les conduits de calibrage.

Dans le présent exemple de réalisation et comme nous pouvons le voir en détail sur la figure 3, la cloison 35 est formée d'une seule pièce (venue de matière) avec la pale. La cloison 35 relie la paroi intrados et la paroi extrados à l'intérieur de la cavité 29. Le dispositif de calibrage comprend une cavité de calibrage 42 qui est agencée en aval des conduits de calibrage 34. La cavité de calibrage 42 est en communication fluidique avec les conduits de calibrage et les orifices de sortie. Autrement dit, la cavité de calibrage 42 est disposée sur le chemin de l'air de refroidissement vers les orifices de sortie (ou encore entre les conduits 34 et les orifices de sortie). De la sorte, l'air de refroidissement circule dans le conduit 30 vers la cavité interne 29 pour traverser les conduits de calibrage 34 et être reçu ensuite dans la cavité de calibrage qui fait office de réservoir. L'air de refroidissement qui occupe toute la cavité de calibrage 42 peut alors traverser les orifices de sortie avec un même débit. Nous comprenons alors qu'il y a une unique cavité de calibrage 42.

Avantageusement, mais non limitativement l'aube est réalisée dans un alliage métallique et suivant un procédé de fabrication utilisant la technique de fonderie à cire perdue. L'alliage métallique est de préférence à base de Nickel et peut être monocristallin.

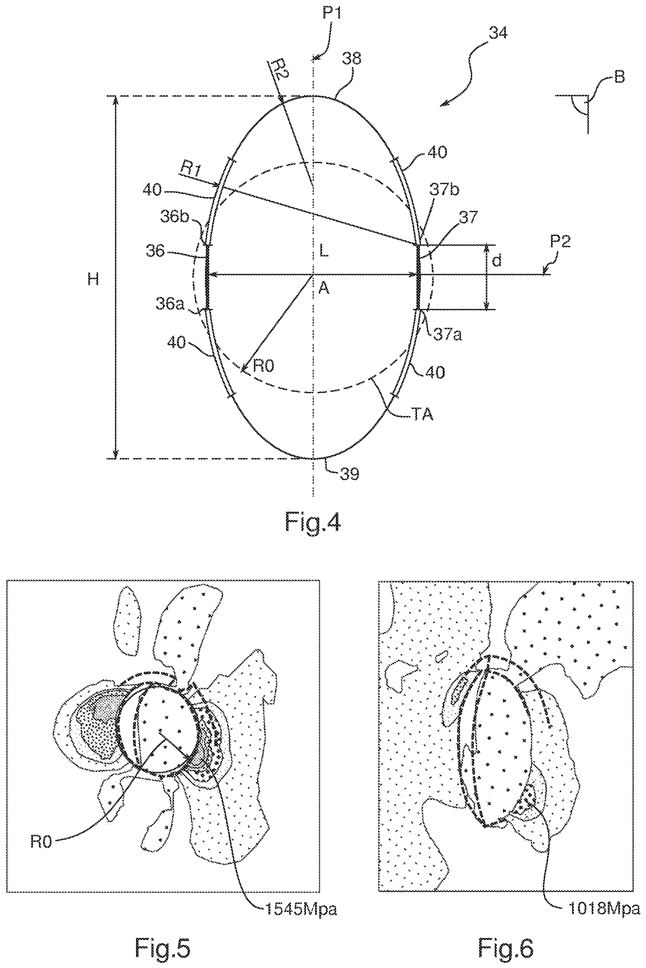

En référence à la figure 4, chaque conduit présente une section transversale de forme oblongue (ou allongée ou ovale) ou sensiblement oblongue. Dans la présente description nous entendons par le terme « oblong » une forme qui est plus longue que large. En particulier, le conduit de forme oblongue s'étend sur une hauteur prédéterminée H et une largeur prédéterminée L. L'axe central A de chaque conduit de calibrage est déterminé par le croisement de la hauteur et de la largeur en leur milieu. Cet axe central A est perpendiculaire au plan B de la cloison 35. Dans le présent exemple et en situation d'installation, la hauteur H du conduit 34 est alignée dans une direction parallèle à l'axe radial tandis que la largeur L est alignée dans une direction parallèle à l'axe transversal.

Le rapport entre la hauteur et la largeur H/L est compris entre 0.5 et 3, et préférentiellement entre 1.4 et 2. En particulier, la hauteur H est en comprise entre 1.4 fois la largeur L et 2 fois la largeur L. De la sorte, les conduits sont espacés suffisamment des uns des autres radialement pour réduire la contrainte statique. La limite basse du rapport H/L est la limite à laquelle le gain sur la contrainte statique devient intéressante.

Chaque conduit 34 présente également deux portions rectilignes dites « première portion » 36 et « deuxième portion » 37 qui sont opposées par rapport à largeur L passant par l'axe central A. La première et la deuxième portions 36, 37 sont parallèles entre elles et s'étendent suivant l'axe radial. Cette configuration permet de réduire localement le facteur de concentration de contrainte « kt » et donc la contrainte. En effet, les efforts de traction sont exercés suivant une direction parallèle à l'axe radial. Les deux portions 36, 37 s'étendent chacune sur une distance d entre un premier sommet 36a, 37a et un deuxième sommet 36b, 37b. Cette distance d est de l'ordre de 0.2 mm.

De même, chaque conduit comprend deux extrémités arrondies dites « première extrémité » 38 et « deuxième extrémité » 39 qui sont opposées par rapport à la hauteur H passant par l'axe central A.

Avantageusement, mais non limitativement, chaque conduit 34 comprend un double rayon de manière à augmenter la valeur du rayon nominal R0 que présente un conduit classique TA de section circulaire de l'art antérieur (représenté en traits pointillés sur la figure 3). Le double rayon est placé là où la contrainte est maximale sur les parois ou périmètres du conduit. En particulier, chaque conduit comprend des portions 40 en arc de cercle ayant chacun un rayon R1 dit « premier rayon R1 ». Ces portions 40 en arc de cercle sont situées respectivement entre les première et deuxième portions rectilignes 36, 37 et les première et deuxième extrémités arrondies 38, 39 suivant le périmètre du conduit.

Nous pouvons voir qu'il y a quatre portions 40 en arc de cercle de premier rayon R1. Les portions 40 sont symétriques par rapport à un premier plan médian P1 passant par l'axe central et perpendiculaire à la largeur L. Ces portions 40 sont également symétriques par rapport à un deuxième plan médian P2 passant par l'axe central et perpendiculaire à la hauteur H.

Sur l'exemple de la figure 4, le centre d'une portion 40 de la section du conduit de rayon R1 placé d'un côté du plan médian P2 est placé respectivement sur une des extrémités 36a, 36b, 37a, 37b de la portion rectiligne 36, 37 qui est opposée à la portion 40 par rapport au plan médian P1 et la dite extrémité est placée du même côté du plan médian P2 de la portion 40. Bien entendu, un autre agencement des centres des rayons est envisageable.

Dans le présent exemple, la valeur du premier rayon R1 correspond à deux fois le rayon nominal R0 du conduit à section circulaire. Le conduit à section transversale circulaire a une surface de passage égale à celle de la section transversale du conduit avec une section transversale de forme oblongue. La valeur du rayon nominal R0 est de l'ordre de 0.35 mm.

Les première et deuxième extrémités 38, 39 sont arrondies suivant un arc de cercle avec chacun un rayon R2 dit « deuxième rayon R2 ». Dans le présent exemple, la valeur du deuxième rayon R2 est inférieure à celle du premier rayon R1. En particulier, la valeur du deuxième rayon est égale à 0.4xR1.

Pour une valeur du premier rayon R1 donnée, la valeur de la distance d et celle du deuxième rayon R2 permettent de minimiser la section du conduit tout en assurant un premier rayon R1 conséquent là où les contraintes sont importantes.

Sur les figures 5 et 6 sont représentées des cartographies à ISO échelle des contraintes statiques qui sont la conséquence du chargement subi par la cloison (principalement thermique et centrifuge) portant les conduits de calibrage 34 par lesquels passe de l'air de refroidissement avant de traverser les orifices de sortie. Sur la figure 4 nous voyons en perspective et en vue de face un conduit de section transversale circulaire de rayon nominal R0 de l'art antérieur et sur la figure 5 il s'agit d'un conduit avec une section transversale de forme oblongue avec notamment un double rayon. Nous voyons qu'avec de telles dimensions et géométries, une analyse comparative par calcul d'éléments finis a permis de montrer que la contrainte statique localisée sur une portion de paroi du conduit passe de 1546 Mpa (les petits points très rapprochés montrent les contraintes maximales) avec un trou circulaire à 10018 Mpa avec un conduit de forme oblongue, soit une réduction d'environ 34%.

## Revendications

1. Aube (20) de turbomachine comprenant :
- une pale (21) avec une paroi intrados et une paroi extrados qui sont reliées en amont par un bord d'attaque (26) et en aval par un bord de fuite (27),
- un circuit de refroidissement (28) qui comprend une cavité interne (29) s'étendant suivant un axe radial à l'intérieur de la pale et une pluralité d'orifices de sortie (32) orientés sensiblement chacun suivant un axe longitudinal X, chaque orifice de sortie communiquant avec la cavité interne (29) et étant agencé au voisinage du bord de fuite (27), et
- un dispositif de calibrage (33) agencé dans la cavité interne (29) et pourvu de conduits (34) de calibrage disposés sensiblement en regard des orifices de sortie (32), les conduits (34) de calibrage comprenant chacun une section transversale, sensiblement perpendiculaire à l'axe longitudinal, de forme oblongue,
**caractérisé en ce que** le dispositif de calibrage comprend une cavité de calibrage (42) disposée en aval des conduits de calibrage (34), la cavité de calibrage (42) étant en communication fluidique avec les conduits de calibrage (34) et les orifices de sortie (32), et **en ce que** chaque conduit de calibrage (34) comprend une première portion (36) et une deuxième portion (37) rectilignes qui sont opposées suivant une largeur prédéterminée L passant par l'axe central A de chaque conduit (34) de calibrage, la première et la deuxième portions étant parallèles entre elles et s'étendant suivant l'axe radial.

2. Aube (20) selon la revendication précédente, **caractérisée en ce que** les conduits (34) de calibrage sont portés par une cloison (35) s'étendant radialement dans la cavité interne (29) et percent la cloison de part et d'autre suivant sensiblement un axe perpendiculaire à un plan médian de la cloison (35).

3. Aube (20) selon l'une des revendications précédentes, **caractérisée en ce que** chaque première et deuxième portions (36, 37) rectilignes s'étend sur une distance d de l'ordre de 0.2 mm.

4. Aube (20) selon l'une quelconque des revendications précédentes, **caractérisée en ce que** chaque conduit de calibrage (34) s'étend sur une hauteur prédéterminée H et comprend une première extrémité (38) et une deuxième extrémité (39) arrondies qui sont opposées suivant la hauteur prédéterminée.

5. Aube (20) selon la revendication 4, **caractérisée en ce que** le rapport de la hauteur prédéterminée et de la largeur prédéterminée est compris entre 0.5 et 2, 5.

6. Aube (20) selon l'une quelconque des revendications précédentes, **caractérisée en ce que** chaque conduit de calibrage (34) comprend des portions (40) en arc de cercle d'un premier rayon R1 qui sont symétriques par rapport à un premier plan médian (P1) passant par l'axe central A et perpendiculaire à la largeur prédéterminée L, et qui sont symétriques par rapport à deuxième plan médian (P2) passant par l'axe central et perpendiculaire à la hauteur prédéterminée H.

7. Aube (20) selon la revendication précédente, **caractérisée en ce que** les première et deuxième extrémités (38, 39) sont arrondies suivant un arc de cercle d'un deuxième rayon R2, la valeur du deuxième rayon R2 étant inférieure à celle du premier rayon R1.

8. Aube (20) selon l'une quelconque des revendications 6 et 7, **caractérisée en ce que** la valeur du premier rayon R1 est égale à deux fois un rayon nominal R0 d'un conduit de calibrage à section circulaire, la section circulaire ayant une surface de passage égale à celle de la section transversale du conduit de calibrage avec une section de forme oblongue.

9. Turbine de turbomachine comprenant au moins une aube (20) selon l'une quelconque des revendications précédentes.

10. Turbomachine (1) comprenant au moins une turbine selon la revendication précédente.

## Patentansprüche

1. Schaufel (20) eines Turbotriebwerks, umfassend:
- ein Blatt (21) mit einer Innenwand und einer Außenwand, die stromaufwärts durch eine Angriffskante (26) und stromabwärts durch eine Hinterkante (27) verbunden sind,
- einen Kühlkreislauf (28), der einen inneren Hohlraum (29), der sich entlang einer radialen Achse im Inneren der Schaufel erstreckt, und eine Vielzahl von Austrittsöffnungen (32) umfasst, die jeweils im Wesentlichen entlang einer Längsachse X ausgerichtet sind, wobei jede Austrittsöffnung mit dem inneren Hohlraum (29) kommuniziert und in der Nähe der Hinterkante (27) angeordnet ist, und
- eine Kalibrierungsvorrichtung (33), die im inneren Hohlraum (29) eingerichtet ist und mit Kalibrierungskanälen (34) versehen ist, die im Wesentlichen den Austrittsöffnungen (32) zugewandt angeordnet sind, wobei die Kalibrierungskanäle (34) jeweils einen querverlaufenden Querschnitt, der im Wesentlichen senkrecht zur Längsachse verläuft, mit länglicher Form umfassen,
**dadurch gekennzeichnet, dass** die Kalibrierungsvorrichtung einen Kalibrierungshohlraum (42) umfasst, der stromabwärts der Kalibrierungskanäle (34) angeordnet ist, wobei der Kalibrierungshohlraum (42) mit den Kalibrierungskanälen (34) und den Austrittsöffnungen (32) in strömungstechnischer Kommunikation steht, und dadurch, dass jeder Kalibrierungskanal (34) einen ersten Abschnitt (36) und einen zweiten Abschnitt (37) umfasst, die geradlinig sind und entlang einer vorbestimmten Breite L, die durch die zentrale Achse A jedes Kalibrierungskanals (34) verläuft, gegenüberliegend sind, wobei der erste und der zweite Abschnitt parallel zueinander sind und sich entlang der radialen Achse erstrecken.

2. Schaufel (20) nach dem vorstehenden Anspruch, **dadurch gekennzeichnet, dass** die Kalibrierungskanäle (34) von einer Trennwand (35) gestützt werden, die sich im inneren Hohlraum (29) radial erstreckt, und die Trennwand im Wesentlichen entlang einer zu einer mittleren Ebene der Trennwand (35) senkrechten Achse beidseitig durchstechen.

3. Schaufel (20) nach dem vorstehenden Anspruch, **dadurch gekennzeichnet, dass** jeder erste geradlinige und zweite geradlinige Abschnitt (36, 37) sich über eine Strecke d in der Größenordnung von 0,2 mm erstreckt.

4. Schaufel (20) nach dem vorstehenden Anspruch, **dadurch gekennzeichnet, dass** sich jeder Kalibrierungskanal (34) über eine vorbestimmte Höhe H erstreckt und ein erstes abgerundetes Ende (38) und ein zweites abgerundetes Ende (39) umfasst, die entlang der vorbestimmten Höhe gegenüberliegend sind.

5. Schaufel (20) nach Anspruch 4, **dadurch gekennzeichnet, dass** das Verhältnis der vorbestimmten Höhe zur vorbestimmten Breite zwischen 0,5 und 2,5 beträgt.

6. Schaufel (20) nach einem der vorstehenden Ansprüche, **dadurch gekennzeichnet, dass** jeder Kalibrierungskanal (34) kreisbogenförmige Abschnitte (40) mit einem ersten Radius R1 umfasst, die in Bezug auf eine erste mittlere Ebene (P1), die durch die zentrale Achse A verläuft und senkrecht zur vorbestimmten Breite L ist, symmetrisch sind und die in Bezug auf eine zweite mittlere Ebene (P2), die durch die zentrale Achse A verläuft und senkrecht zur vorbestimmten Höhe H ist, symmetrisch sind.

7. Schaufel (20) nach dem vorstehenden Anspruch, **dadurch gekennzeichnet, dass** das erste und das zweite Ende (38, 39) entlang einer Kreisbogenform mit einem zweiten Radius R2 abgerundet sind, wobei der Wert des zweite Radius R2 kleiner ist als jener des ersten Radius R1.

8. Schaufel (20) nach einem der Ansprüche 6 und 7, **dadurch gekennzeichnet, dass** der Wert des ersten Radius R1 gleich dem Zweifachen eines nominalen Radius R0 eines Kalibrierungskanals mit kreisförmigem Querschnitt ist, wobei der kreisförmige Querschnitt eine Durchgangsfläche aufweist, die gleich jener des querverlaufenden Querschnitts des Kalibrierungskanals mit länglicher Form ist.

9. Turbine eines Turbotriebwerks, umfassend mindestens eine Schaufel (20) nach einem der vorstehenden Ansprüche.

10. Turbotriebwerk (1), umfassend mindestens eine Turbine nach dem vorstehenden Anspruch.

## Claims

1. A turbine engine vane (20) comprising:
- a blade (21) with a pressure side wall and a suction side wall which are connected upstream by a leading edge (26) and downstream by a trailing edge (27),
- a cooling circuit (28) which comprises an internal cavity (29) extending inside the blade and a plurality of outlet orifices (32) each oriented substantially along a longitudinal axis X, each outlet orifice communicating with the internal cavity (29) and being arranged in the vicinity of the trailing edge (27), and
- a calibration device (33) arranged in the internal cavity (29) and provided with calibration conduits (34) which are arranged substantially opposite the outlet orifices (32), the calibration conduits (34) each comprising an oblong transverse section which is substantially perpendicular to the longitudinal axis,
**characterized in that** the calibration device comprises a calibration cavity (42) arranged downstream of the calibration conduits (34), the calibration cavity (42) being in fluid communication with the calibration conduits (34) and the outlet orifices (32), and **in that** each calibration conduit (34) comprises a first rectilinear portion (36) and a second rectilinear portion (37) which are opposite along a predetermined width L passing through the central axis A of each calibration conduit (34), the first portion and a second portion being parallel between each other and extending along the radial axis.

2. The vane (20) according to the preceding claim, **characterized in that** the calibration conduits (34) are carried by a partition (35) extending radially in the blade and pierce the partition (35) on either side along an axis substantially perpendicular to the median plane of the partition (35).

3. The vane (20) according to one of the preceding claims, **characterized in that** each first and second rectilinear portion (36, 37) extends over a distance d of the order of 0.2 mm.

4. The vane (20) according to any one of the preceding claims, **characterized in that** each calibration conduit (34) extends over a predetermined height H and comprises a first end (38) and a second rounded end (39) which are opposite along the predetermined height.

5. The vane (20) according to claim 4, **characterized in that** the ratio of the predetermined height and the predetermined width is between 0.5 and 2.5.

6. The vane (20) according to any one of preceding claims, **characterized in that** each calibration conduit (34) comprises circular arc portions (40) of a first radius R1 which are symmetrical with respect to a first median plane (P1) passing through the central axis A and perpendicular to the predetermined width L, and which are symmetrical with respect to a second median plane (P2) passing through the central axis and perpendicular to the predetermined height H.

7. The vane (20) according to the preceding claim, **characterized in that** the first and second ends (38, 39) are rounded along a circular arc of a second radius R2, the value of the second radius R2 being less than that of the first radius R1.

8. The vane (20) according to any one of claims 6 and 7, **characterized in that** the value of the first radius R1 is equal to twice a nominal radius R0 of a calibration conduit with a circular section, the circular section having a passage area equal to that of the transverse section of the calibration conduit with an oblong-shaped section.

9. A turbine engine turbine comprising at least one vane (20) according to any of the preceding claims.

10. A turbine engine (1) comprising at least one turbine according to the preceding claim.
